# EUROPEAN PATENT SPECIFICATION

(11) **EP 1 832 378 B1**
(45) Date of publication and mention of the grant of the patent: **12.12.2012**
(21) Application number: 07250965.6
(22) Date of filing: 08.03.2007
(51) Int. Cl.: B23K 26/067, B23K 26/08

(54) **Laser irradiation apparatus and method of irradiating a target**
Laserbestrahlungsgerät und laserbestrahlungsverfahren
Appareil et méthode d'irradiation laser

(30) Priority: 08.03.2006 KR 20060021890
(43) Date of publication of application: 12.09.2007
(73) Proprietor: Samsung Mobile Display Co., Ltd., Suwon-si Gyeonggi-do (KR)
(72) Inventor: Jung, Byoung Hyun, c/o Samsung SDI Co. Ltd., Yongin-si, Gyeonggi-do (KR); Cha, You Min, c/o Samsung SDI Co. Ltd., Yongin-si, Gyeonggi-do (KR); Jung, Won Woong, c/o Samsung SDI Co. Ltd., Yongin-si, Gyeonggi-do (KR); Roh, Youn Goo, c/o Samsung SDI Co. Ltd., Yongin-si, Gyeonggi-do (KR)
(74) Representative: Mounteney, Simon James

(56) References cited:
- JP-A- 5 069 170
- JP-A- 7 185 859
- JP-A- 63 010 073
- JP-A- 2000 005 891
- JP-A- 2002 254 189

## Description

The present invention relates to a laser irradiation apparatus of the kind disclosed in JP-A-2002 154 189 capable of being widely used for all kinds of industrial purposes, in particular, for a process of manufacturing an organic light emitting display.

An organic light emitting diode can emit light by using an energy discharged by an excited molecule returning to the ground state. The excited molecule can be generated when a hole and an electron, which are introduced from two opposite electrodes to an organic light emitting layer, combine, by locating organic light emitting layer between the two electrodes and applying voltages to the two electrodes. The organic light emitting display is formed on a base substrate, and a sealing substrate covers an upper portion of the organic light emitting diode.

An important factor in manufacturing the organic light emitting diode is to prevent external air from penetrating a gap between a substrate on which the organic light emitting diode and a sealing substrate. Korean patent publication No. 10-2006-0005369 discloses a method of sealing a gap between the substrate and the sealing substrate by means of a frit. In Korean patent publication No. 10-2006-0005369, after the sealing substrate is coated with the frit and sintered, and aligned on a base substrate, a laser is irradiated to the frit to seal the substrates in such a way that the frit is melted and cured at the base substrate.

In order to efficiently produce a large amount of organic light emitting displays, a plurality of organic light emitting displays are manufactured on one substrate and cut into individual organic light emitting displays. This is called "sheet unit production".

The term "sheet unit production" means a method that involves forming a plurality of organic light emitting displays on a base substrate sheet having a size corresponding to a formation size of the individual organic light emitting displays, coalescing a sealing substrate sheet with the base substrate sheet, and cutting the coalesced substrates suited to individual devices. At this time, when a frit is used as a sealant, the frit is formed corresponding to a position in which individual display devices will be formed.

A coalesced substrate obtained by coalescing a sealing substrate sheet with a base substrate sheet during a process of manufacturing a conventional organic light emitting display in a sheet unit is described as follows. A frit is used as a sealant. A coalesced substrate sheet is provided including a base substrate sheet, a sealing substrate sheet, and a number of frits. A plurality of organic light emitting diodes are formed on the base substrate sheet. The sealing substrate sheet coalesces with the base substrate sheet. The frits are disposed between the base substrate sheet and the sealing substrate sheet, and seal the base substrate sheet and the sealing substrate sheet for every organic light emitting diode.

A laser irradiation apparatus is used to coalesce the frit coated and sintered at the sealing substrate sheet with the base substrate sheet. Since a conventional laser irradiation apparatus includes only one laser head, it separately melts and cures the frits one by one. This consumes a great deal of time and cost. A conventional laser irradiation apparatus also includes a laser oscillator, and a controller. JP-A-2002-254189 describes laser apparatus comprising laser beam oscillators mounted on a travelling frame which moves on a machining stand by means of travelling along a rail.

JP 63010073 describes a laser apparatus comprising three torches mounted on guide bars. The respective spacing between each of the lateral torches and the central torch can be adjusted by means of a respective lead screw.

According to a first aspect of the invention, there is provided a laser irradiation apparatus as set out in Claim 1. Preferred features of this aspect are set out in Claims 2 to 13. According to a second aspect of the invention, there is provided a method of irradiating a plurality of frits with laser beams as set out in Claim 12. Preferred features of this aspect are set out in Claims 13 to 22.

Since the laser irradiation apparatus may move a plurality of laser heads suited to intervals and shapes of a plurality of frits formed on a substrate, it may melt and cure a plurality of frits for a laser irradiation at one time, thereby saving manufacturing time by eliminating the requirement of using the laser irradiation device to melt and cure each frit individually.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a perspective view of a sheet unit substrate before an organic light emitting display is separated into individual devices;

FIG. 2 is a schematic view showing a conventional laser irradiation apparatus;

FIG. 3 is a perspective view of a laser irradiation apparatus according to an embodiment of the present invention;

FIGS. 4A and 4B are operational views of adjusting an interval between laser heads in FIG. 3;

FIGS. 5A and 5B are operational views of adjusting the position of the laser irradiation apparatus of FIG. 3 in an X direction; and

FIGS. 6A and 6B are operational views of adjusting the position of the laser irradiation apparatus of FIG. 3 in a Y direction.

### DETAILED DESCRIPTION OF PREFERRED EMBODIMENTS

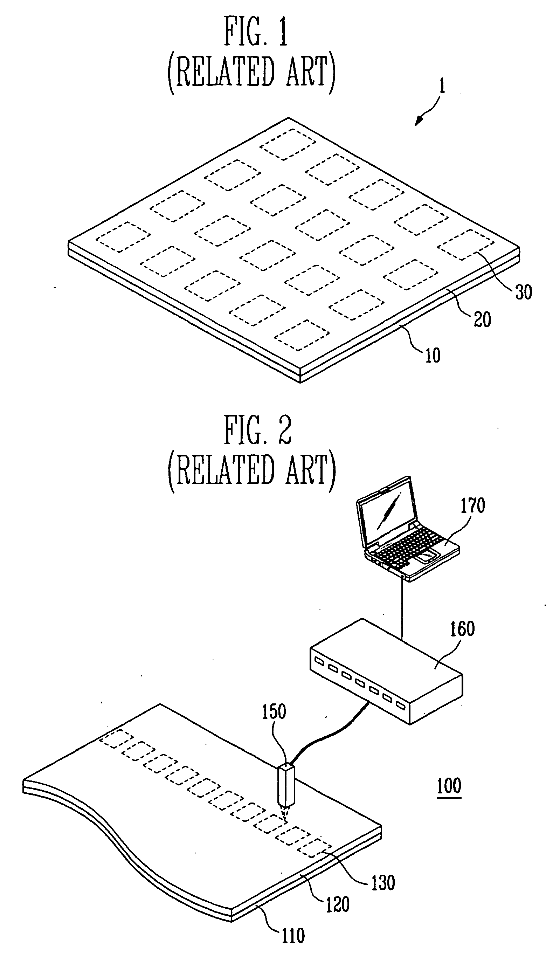

Turning now to the drawings, FIG. 1 is a perspective view showing a coalesced substrate obtained by coalescing a sealing substrate sheet with a base substrate sheet during a process of manufacturing a conventional organic light emitting display in a sheet unit. In FIG. 1, a frit is used as a sealant. As shown in FIG. 1, a coalesced substrate sheet 1 includes a base substrate sheet 10, a sealing substrate sheet 20, and a plurality of frits 30. A plurality of organic light emitting diodes are formed on the base substrate sheet 10. The sealing substrate sheet 20 coalesces with the base substrate sheet 10. The frits 30 are disposed between the base substrate sheet 10 and the sealing substrate sheet 20, and are used to seal the base substrate sheet 10 and the sealing substrate sheet 20 of every organic light emitting diode.

In order to seal the arrangement, a laser irradiation apparatus is used to coalesce a frit 30 coated and sintered at the sealing substrate sheet 20 with the base substrate sheet 10. FIG. 2 is a schematic view showing a conventional laser irradiation apparatus 100. Since the conventional laser irradiation apparatus 100 includes only one laser head, it separately melts and cures each of the frits 30 one by one. This consumes a great deal of time and cost. Reference numeral 160 represents a laser oscillator, and reference numeral 170 represents a controller.

Hereinafter, embodiments according to the present invention will be described with reference to the accompanying drawings. Here, when one element is connected to another element, one element may be not only directly connected to another element but also indirectly connected to another element via another element. Further, certain elements are omitted for clarity. Also, like reference numerals refer to like elements throughout.

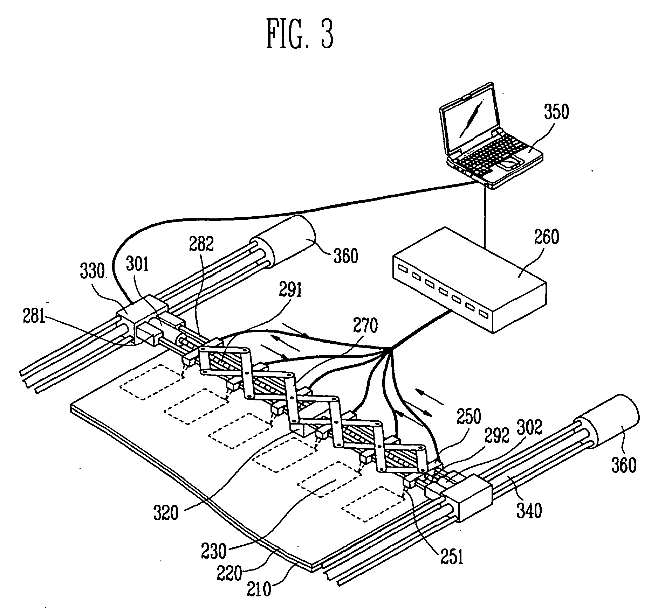

FIG. 3 is a schematic view showing a laser irradiation apparatus according to an embodiment of the present invention. The laser irradiation apparatus includes a laser oscillator 260 and a plurality of laser heads 250. FIG. 3 is a view to explain a principle of the present invention but does not show a connected state of the laser oscillator 260 and the laser heads 250. Here, the laser irradiation apparatus irradiates a laser 251 onto a frit 230 from the laser heads 250. The frit 230 is used as a sealant for an organic light emitting display, and is disposed between a base substrate sheet 210 and the sealing substrate sheet 220.

The laser oscillator 260 is a device capable of generating a laser beam from 800 nm to 1200 nm (nanometers) for melting and curing the frit 230. Each of the laser heads 250 includes an optical system to convert an oscillated laser beam into a linear beam 251. The laser oscillator 260 and the laser heads 250 can be used without limitations in embodiments of the present invention, and a detailed description thereof is omitted.

In this embodiment of the present invention, the plurality of the laser heads 250 are arranged in a line. However, in other embodiments they may be arranged in a plurality of lines. The reason why the plurality of the laser heads 250 are arranged to cause a laser beam from each laser head 250 to simultaneously melt and cure a plurality of frits 230, which are formed on the coalesced substrate sheet. It will be appreciated that in the following description, the term "laser head" is used to refer to the element that produces a laser beam and its casing.

The organic light emitting display can be manufactured in various sizes, so that a shape and a size of the frit can vary. Accordingly, so as to irradiate a laser according to the shape of the frit, a driving means is required to adjust intervals, i.e. the relative spacing, of the laser heads and to move the laser heads in at least a X (first) or Y (second) direction. In this embodiment, the laser heads 250 are arranged to extend in a line in the first or X direction.

The laser irradiation apparatus in this embodiment includes a first driving means or unit, a second driving means or unit, and a controller, which move the laser heads. The first driving means adjusts arranged intervals, i.e. the spacing, of the laser heads 250 and drives the laser heads 250 in a first or X direction so that the laser heads move along a line formed by the frits 230. The X direction is a direction in which the laser head 250 is folded along a cross hanger 270. The first driving means in this embodiment includes a cross hanger 270, two lead screws 291 and 292, two guide bars 281 and 282, and two motors 301 and 302.

The cross hanger 270 includes a plurality of units having an "X" shape or substantially an "X" shape. The units are continuously linked, and folded or unfolded at the same interval. When the laser head is installed at an intersection of the cross hanger 270 to which a plurality of units having the same size are connected, the laser heads 250 can be arranged at the same interval, i.e. at the same relative spacing.

The first lead screw 291 and the second lead screw 292 are formed to pass through the laser heads 250. The first and second lead screws are screw threads that are arranged so as extend in the first or X direction. Therefore, the first lead screw 291 and the second lead screw 292 extend in the same direction as the laser heads 250. Furthermore, the first lead screw 291 and the second lead screw 292 extend along a shared axis and meet at a connecting member 320 in a central region of the laser irradiation apparatus. The first lead screw 291 passes through the laser heads 250 located at one side of the connecting member 320, which will be described later, whereas the second lead screw 292 passes through the laser heads 250 located at the other side of the connecting member 320. The first lead screw 291 and the second lead screw 292 are connected to the connecting member 320, which separates them. The connecting member 320 connects the first lead screw 291 and said second lead screw 292 , while interrupting a supply of power to the first lead screw 291 and the second lead screw 292. In other words, the connecting member 320 prevents the rotation of one lead screw from affecting the other lead screw.

The first and second guide bars 281 and 282 are formed parallel with the first and second lead screws 291 and 292, and also pass through the laser heads 250. When the first and second lead screws 291 and 292 rotate, the laser heads 250 move. In other words, the cross hanger 270 is a support member including a plurality of units having an X shape, which are linked to connect the laser heads to each other. The first lead screw 291 is formed to pass through a first group of the laser heads, and the second lead screw 292 is formed to pass through a second group of the laser heads. The rotation of the first and second lead screws 291 and 292 enables the device to adjust the spacing and position of the laser heads in the X direction, as will be explained in more detail below. In other embodiments of the invention, the support member can take an alternative arrangement. For example, the first and second screws could act on another portion of the support member and not the laser heads. As a result, the first and second screws need not necessarily pass through the laser heads. Furthermore, the extendible support member shown in Figure 2 is only one example of an arrangement capable of adjusting the position and spacing of the laser heads.

First and second motors 301 and 302 are located at the sides of the laser irradiation apparatus and are connected to a respective end of the first and second lead screws 291 and 292. The first and second motors 301 and 302 rotate the first and second lead screws 291 and 292, respectively. Each one of the first and second motors 301 and 302 is a bidirectional motor, which can rotate in forward and reverse directions.

The second driving means moves the laser heads 250 in a second or Y direction different from the driving direction of the first driving means. The second driving means includes a slide member 330, a slide route 340, and a third motor 360. The slide member 330 is connected to both ends of the lead screws 291 and 292, and the first and second guide bars 281 and 282. The slide member 330 is arranged to slide along the slide route 340, with the result that the laser heads 250 connected to the lead screws 291 and 292, and the first and second guide bars 281 and 282 move. The slide member 330 may be either directly connected to both ends of the lead screws 291 and 292, and the first and second guide bars 281 and 282 or connected to both ends thereof through an intermediate device.

The slide route 340 provides a passage on which the slide member can be guided, and includes a groove of a shape corresponding to a slide surface of the slide member 330. The third motor 360 provides power to the slide member 330, so that the slide member 330 slides on the slide route 340. The third motor 360 is also a bidirectional motor. In this embodiment, although the slide member 330 and the slide route 340 are constructed by a ball busing, embodiments of the present invention are not limited thereto.

The controller 350 controls the first driving means and the second driving means and can adjust the relative spacing and the path of the laser heads 250 so as to match the position of the frits.. Accordingly, when data related to the shape and arrangement of the frit 230 are inputted to the controller 350, the controller 350 calculates a running path of the laser head 250 to control driving of the motors. Hence, the spacing and the path of the laser heads 250 can be matched to the shape and arrangement of the plurality of frits 230.

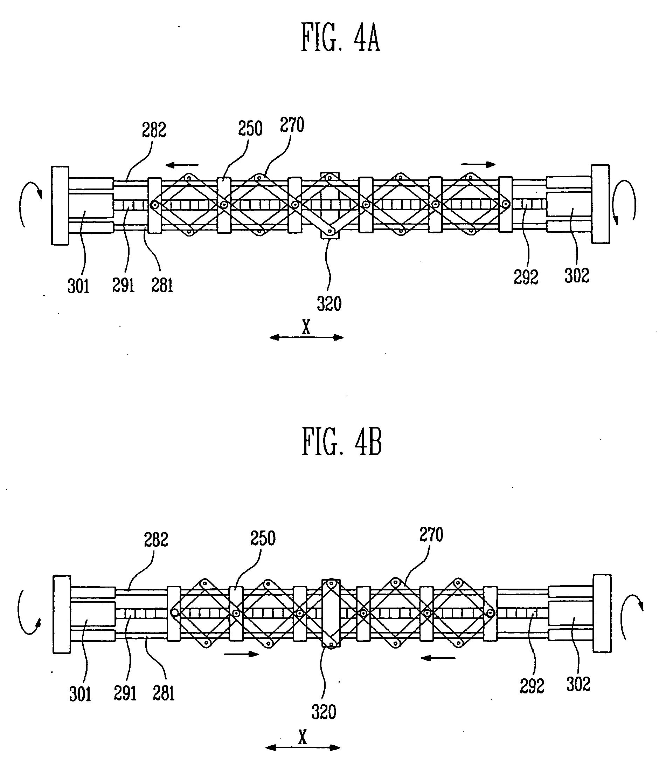

Hereinafter, an operation of the laser irradiation apparatus according to an embodiment of FIG. 3 will be described with reference to FIG. 4a to FIG. 6b. When data related to the shape and interval of the frits 230 to be irradiated are inputted to the controller 350, the controller 350 drives the first motor 301, the second motor 302, and the third motor 360, so that the laser heads 250 move in X and Y directions corresponding to the shape of the frits and irradiate a laser to the frit to be melted and cured.

The adjustment of the intervals, i.e. relative spacing, between the laser heads will be explained with reference to FIGS. 4a and FIG. 4b. The intervals between the laser heads 250 are adjusted by rotating the first motor 301 and the second motor 302 in opposite directions to each other. When the first motor 301 and the second motor 302 drive in opposite directions to each other, the laser heads 250 are moved towards the center or towards a respective side of the device by the action of the lead screws 291 and 292, and the guide bars 281 and 282. Rotating the first and second motors in different directions will cause the size of the spacing between the laser heads to be increased or reduced. However, as the cross hanger 270 is constructed using the same sized units, the spacing between one of the laser heads 250 and a next one of the laser heads will be the same. Accordingly, the spacing of the laser heads 250 can be adjusted corresponding to spacing of the frits, which are continuously formed on a substrate at the same interval.

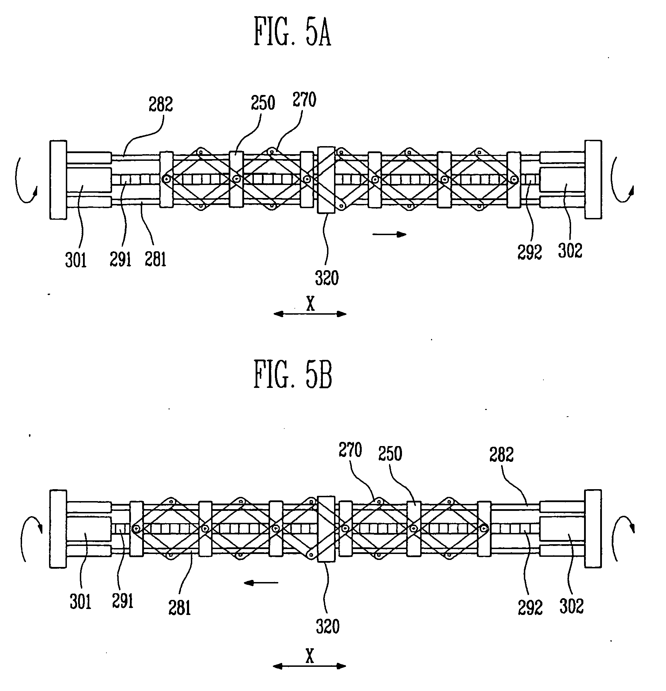

The adjustment in the X direction will be described with reference to FIGS. 5A and 5B. Rotating the first motor 301 and the second motor 302 in the same direction achieves an adjustment in the X direction of the laser heads 250. When rotating the first motor 301 and the second motor 302 in the same direction, the laser heads 250 are in the state that the lead screws 291 and 292 pass through the laser heads 250, so that the laser heads 250 move. Accordingly, the laser heads 250 can be moved along a transverse line of a square or rectangular frit 230.

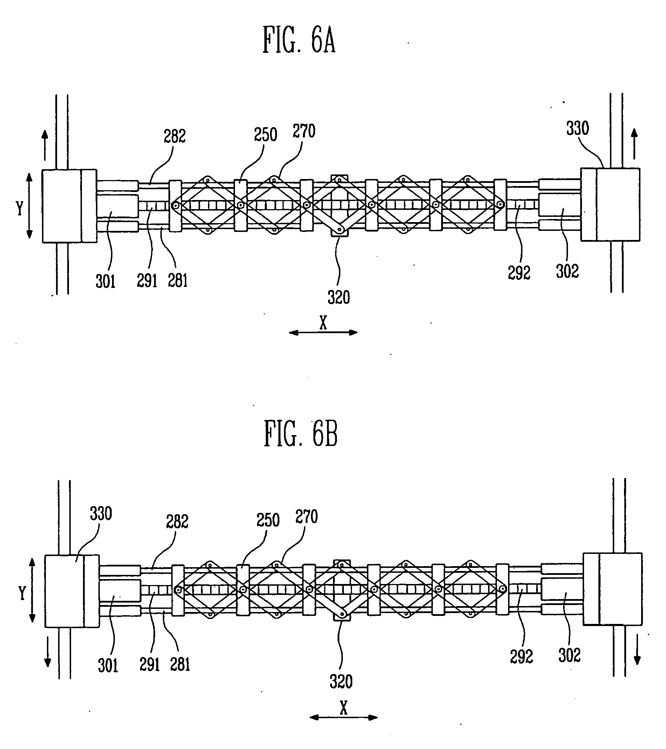

The adjustment in the Y direction will be described with reference to FIGS. 6A and 6B. Rotating the third motor 360 achieves an adjustment to the Y direction of the laser heads 250. Namely, driving the third motor 360 moves the slide member 330, so that the laser heads 250 cooperate with the slide member 330 and move. Accordingly, the laser heads 250 can be moved along a longitudinal line of a square frit 230.

Although a few embodiments of the present invention have been shown and described, it would be appreciated by those skilled in the art that changes might be made in this embodiment without departing from the principles of the invention, the scope of which is defined in the claims and their equivalents. For example, although a cross hanger is used as an adjustment means of the same interval in some embodiments, an automatic control system for automatically calculating positions of laser heads could be used for the intervals of the laser heads.

## Claims

1. A laser irradiation apparatus comprising:
a plurality of laser heads (250), each for irradiating a target (230) with a laser beam (251);
a first driving means (270, 291, 292, 281, 282, 301, 302) for adjusting the relative spacing of said laser heads (250), and for moving said laser heads (250) in a first direction; and
a second driving means (330, 340, 360) for moving said laser heads (250) in a second direction different from the first direction;
and **characterized in that** the first driving means (270, 291, 292, 281, 282, 301, 302) comprises:
a support member (270) including a plurality of units having an X shape, which are linked to connect said laser heads (250) to each other;
a first lead screw (291) formed to pass through a first group of said plurality of laser heads (250);
a first guide bar (281, 282) disposed to pass trough said plurality of laser heads (250) and arranged to be parallel with said first lead screw (291);
a first motor (301) for rotating said first lead screw (291);
a second lead screw (292) disposed to pass through a second group of said plurality of laser heads (250), wherein the second lead screw (292) is arranged to be coaxial with said first lead screw (291);
a second guide bar (282) formed to pass through said plurality of laser heads (250) and arranged to be parallel with said second lead screw (292); and
a second motor (302) for rotating said second lead screw (292).

2. A laser irradiation apparatus according to claim 1, wherein the first and second directions are at 90 degrees to each other.

3. A laser irradiation apparatus according to claim 1 or 2, wherein each unit of the support member (270) is the same size.

4. A laser irradiation apparatus according to any preceding claim, further comprising a connecting member (320) for connecting said first lead screw (291) and said second lead screw (292) to each other, while preventing the rotation of one of the lead screws affecting the other of the lead screws.

5. A laser irradiation apparatus according to any one of claims 1 to 4, wherein said second driving means (330, 340, 360) comprises:
a slide member (330) connected at both ends of one of the lead screws (291, 292) and a guide bar (281, 282);
a slide route (340), said slide member (330) being arranged so as to be guided on said slide route (340); and
a third motor (360) for driving said slide member (330).

6. A laser irradiation apparatus according to claim 5, wherein said slide member (330) is a ball bushing, and a slide route is a shaft.

7. A laser irradiation apparatus according to any one of claims 1 to 6, further comprising a controller for controlling said first driving means (270, 291, 292, 281, 282, 301, 302) and said second driving means (330, 340, 360) so as to adjust the spacing of the plurality of laser heads (250) and a path of said plurality of laser heads (250).

8. A laser irradiation apparatus according to any preceding claim, wherein a wavelength of the laser irradiated by the laser irradiation apparatus ranges from 800 nanometers to 1200 nanometers.

9. A laser irradiation apparatus according to any preceding claim, wherein the apparatus further comprises:
a laser oscillator (260) to oscillate a plurality of laser beams (251);
wherein each of the plurality of laser beards (250) includes an optical system for converting an oscillated laser beam (251) into a linear beam;
wherein each of the plurality of laser heads (250) irradiates a target (230) with a said linear beam.

10. A method of irradiating a target comprising:
using a plurality of laser heads (250), each for irradiating a target (230) with a laser beam (251);
using a first driving means (270, 291, 292, 281, 282, 301, 302) for adjusting the relative spacing of said plurality of laser heads (250), and for moving said plurality of laser heads (250) in a first direction; and
using a second driving means (330, 340, 360) for moving said plurality of laser heads (250) in a second direction different from the first direction;
wherein the first driving means (270, 291, 292, 281, 282, 301, 302) comprises:
a support member (270) including a plurality of units having an X shape, which are linked to connect said plurality of laser heads (250) to each other;
a first lead screw (291) formed to pass through a first group of said plurality of laser heads (250);
a first guide bar (281, 282) disposed to pass through said plurality of laser heads (250) and arranged to be parallel with said first lead screw (291):
a first motor (301) for rotating said first lead screw (291);
a second lead screw (292) disposed to pass through a second group of said plurality of laser heads (250), wherein the second lead screw (292) is arranged to be coaxial with said first lead screw (291);
a second guide bar (282) formed to pass through said plurality of laser heads (250) and arranged to be parallel with said second lead screw (292); and
a second motor (302) for rotating said second lead screw (292).

11. A method according to claim 10, wherein the target (230) is a plurality of frits (230), said frits (230) being arranged to seal an organic emission layer of an organic light emitting display from an outside air, the method further comprising:
using the first driving means (270, 291, 292, 281, 282, 301, 302) for moving said plurality of laser heads (250) along a line formed by the frits (230).

12. A method according to claim 11, wherein the frit (230) has a rectangular shape, the first direction is a transverse direction of the frit (230), and the second direction is a longitudinal direction of the frit (230).

13. A method according to any one of claims 10 to 12, wherein each unit of said support member (270) is the same size.

14. A method as claimed in any one of claims 10 to 13, further comprising using a connecting member (320) for connecting said first lead screw (291) and said second lead screw (292) to each other, while preventing the rotation of one of the lead screws affecting the other of the lead screws.

15. A method according to any one of claims 10 to 14, wherein said second driving means (330, 340, 360) comprises:
a slide member (330) connected at both ends of a lead screw (291, 292) and a guide bar (281, 282);
a slide route (340), said slide member (330) being guided on said slide route (340); and
a third motor (360) for driving said slide member (330).

16. A method according to claim 15, wherein said slide member (330) is a ball bushing, and a slide route (340) is a shaft.

17. A method according to any one of claims 10 to 16, further comprising using a controller to control said first driving means (270, 291, 292, 281, 282, 301,302) and said second driving means (330, 340, 360) so as to adjust the spacing of the plurality of laser heads (250) and a path of said plurality of laser heads (250).

18. A method according to any one of claims 10 to 17, wherein a wavelength of the laser irradiated by the laser irradiation apparatus ranges from 800 nanometers to 1200 nanometers.

19. A method according to claim 10, wherein the target is a plurality of frits (230), said frits (230) being arranged to seal an organic emission layer of an organic light emitting display from an outsize air, the method further comprising:
using a laser oscillator (260) to oscillate the plurality of laser beams (251), wherein the plurality of laser heads (250) receive a respective oscillated laser beam (251), wherein each laser head (250) is arranged to irradiate one of the plurality of frits (230) formed on a sheet substrate with a linear laser beam; and cutting the sheet substrate so as to form a number of individual organic light emitting display devices.

## Patentansprüche

1. Laserbestrahlungsvorrichtung, Folgendes umfassend:
eine Vielzahl von Laserköpfen (250), jeder zum Bestrahlen eines Ziels (230) mit einem Laserstrahl (251);
ein erstes Ansteuermittel (270, 291, 292, 281, 282, 301, 302) zum Anpassen der relativen Abstände der Laserköpfe (250) und zum Bewegen der Laserköpfe (250) in einer ersten Richtung; und
ein zweites Ansteuermittel (330, 340, 360) zum Bewegen der Laserköpfe (250) in einer zweiten Richtung, die von der ersten Richtung verschieden ist;
und **dadurch gekennzeichnet, dass** das Ansteuermittel (270, 291, 292, 281, 282, 301,302) umfasst:
ein Stützglied (270) einschließlich einer Vielzahl von X-förmigen Einheiten, die verkoppelt sind, um die Laserköpfe (250) miteinander zu verbinden;
eine erste Leitspindel (291), die geformt ist, um durch eine erste Gruppe der Vielzahl von Laserköpfen (250) hindurchzugehen;
eine erste Führungsstange (281, 282), die dazu angeordnet ist, durch die Vielzahl von Laserköpfen (250) hindurchzugehen, und parallel zur ersten Leitspindel (291) angeordnet ist;
einen ersten Motor (301) zum Drehen der ersten Leitspindel (291);
eine zweite Leitspindel (292), die dazu angeordnet ist, durch eine zweite Gruppe der Vielzahl von Laserköpfen (250) hindurchzugehen, worin die zweite Leitspindel (292) dazu angeordnet ist, mit der ersten Leitspindel (291) koaxial zu verlaufen;
eine zweite Führungsstange (282), die geformt ist, um durch die Vielzahl von Laserköpfen (250) hindurchzugehen und angeordnet ist, parallel zur zweiten Leitspindel (292) zu verlaufen; und
einen zweiten Motor (302) zum Drehen der zweiten Leitspindel (292).

2. Laserbestrahlungsvorrichtung nach Anspruch 1, worin die ersten und zweiten Richtungen in einem Winkel von 90 Grad zueinander verlaufen.

3. Laserbestrahlungsvorrichtung nach Anspruch 1 oder 2, worin jede Einheit des Stützglieds (270) dieselbe Größe hat.

4. Laserbestrahlungsvomchtung nach einem vorhergehenden Anspruch, außerdem ein Verbindungsglied (320) umfassend, um die erste Leitspindel (291) und die zweite Leitspindel (292) miteinander zu verbinden, während verhindert wird, dass die Drehung von einer der Leitspindeln auf die andere der Leitspindeln einwirkt.

5. Laserbestrahlungsvorrichtung nach einem der Ansprüche 1 bis 4, worin das zweite Ansteuermittel (330, 340, 360) Folgendes umfasst:
ein Gleitglied (330), das an beiden Enden einer der Leitspindeln (291, 292) und einer Führungsstange (281, 282) angeschlossen ist;
einen Gleitweg (340), wobei das Gleitglied (330) dazu angeordnet ist, auf dem Gleitweg (340) geführt zu werden; und
einen dritten Motor (360) zum Ansteuern des Gleitglieds (330).

6. Laserbestrahlungsvorrichtung nach Anspruch 5, worin das Gleitglied (330) eine Kugellaufbuchse ist und ein Gleitweg ein Bolzen ist.

7. Laserbestrahlungsvorrichtung nach einem der Ansprüche 1 bis 6, außerdem ein Steuergerät zum Steuern des ersten Ansteuermittels (270, 291, 292, 281, 282, 301, 302) und des zweiten Ansteuermittels (330, 340, 360) umfassend, um die Abstände der Vielzahl von Laserköpfen (250) und einen Pfad der Vielzahl von Laserköpfen (250) anzupassen.

8. Laserbestrahlungsvorrichtung nach einem vorhergehenden Anspruch, worin eine Wellenlänge des von der Laserbestrahlungsvorrichtung bestrahlten Lasers im Bereich von 800 Manometern bis 1200 Nanometern liegt.

9. Laserbestrahlungsvorrichtung nach einem vorhergehenden Anspruch, worin die Vorrichtung außerdem umfasst:
einen Laseroszillator (260) zum Oszillieren einer Vielzahl von Laserstrahlen (251);
worin jeder der Vielzahl von Laserköpfen (250) ein optisches System enthält, um einen oszillierten Laserstrahl (251) in einen linearen Strahl umzuwandeln;
worin jeder der Vielzahl von Laserköpfen (250) mit einem solchen linearen Strahl ein Ziel (230) bestrahlt.

10. Verfahren zum Bestrahlen eines Ziels, Folgendes umfassend:
Verwenden einer Vielzahl von Laserköpfen (250), ein jeder zum Bestrahlen eines Ziels (230) mit einem Laserstrahl (251);
Verwenden eines ersten Ansteuermittel (270, 291, 292, 281, 282, 301, 302) zum Anpassen der relativen Abstände der Vielzahl von Laserköpfen (250) und zum Bewegen der Vielzahl von Laserköpfen (250) in einer ersten Richtung; und
Verwenden eines zweiten Ansteuermittels (330, 340, 360) zum Bewegen der Vielzahl von Laserköpfen (250) in einer zweiten Richtung, die von der ersten Richtung verschieden ist;
worin das erste Ansteuermittel (270, 291, 292, 281, 282, 301, 302) Folgendes umfasst:
ein Stützglied (270) einschließlich einer Vielzahl von X-förmigen Einheiten, die verkoppelt sind, um die Vielzahl von Laserköpfen (250) miteinander zu verbinden;
eine erste Leitspindel (291), die geformt ist, um durch eine erste Gruppe der Vielzahl von Laserköpfen (250) hindurchzugehen;
eine erste Führungsstange (281, 282), die dazu angeordnet ist, durch die Vielzahl von Laserköpfen (250) hindurchzugehen, und parallel zur ersten Leitspindel (291) angeordnet ist;
einen ersten Motor (301) zum Drehen der ersten Leitspindel (291);
eine zweite Leitspindel (292), die dazu angeordnet ist, durch eine zweite Gruppe der Vielzahl von Laserköpfen (250) hindurchzugehen, worin die zweite Leitspindel (292) dazu angeordnet ist, mit der ersten Leitspindel (291) koaxial zu verlaufen;
eine zweite Führungsstange (282), die geformt ist, um durch die Vielzahl von Laserköpfen (250) hindurchzugehen und dazu angeordnet ist, parallel zur zweiten Leitspindel (292) zu verlaufen; und
einen zweiten Motor (302) zum Drehen der zweiten Leitspindel (292).

11. Verfahren nach Anspruch 10, worin das Ziel (230) eine Vielzahl von Fritten (230) ist, wobei die Fritten (230) dazu angeordnet sind, eine organische Emissionsschicht eines organischen lichtemittierenden Displays von einer Außenluft zu isolieren, wobei das Verfahren außerdem umfasst:
Verwenden des ersten Ansteuermittels (270, 291, 292, 281, 282, 301, 302) zum Bewegen der Vielzahl von Laserköpfen (250) entlang einer durch die Fritten (230) geformten Linie.

12. Verfahren nach Anspruch 11, worin die Fritte (230) eine rechteckige Form hat, wobei die erste Richtung eine Querrichtung der Fritte (230) ist und die zweite Richtung eine Längsrichtung der Fritte (230) ist.

13. Verfahren nach einem der Ansprüche 10 bis 12, worin jede Einheit des Stützglieds (270) dieselbe Größe hat.

14. Verfahren nach einem der Ansprüche 10 bis 13, außerdem umfassend, dass eine Verbindungsglied (320) verwendet wird, um die erste Leitspindel (291) und die zweite Leitspindel (292) miteinander zu verbinden, während verhindert wird, dass die Drehung von einer der Leitspindeln auf die andere der Leitspindeln einwirkt.

15. Verfahren nach einem der Ansprüche 10 bis 14, worin das zweite Ansteuermittel (330, 340, 360) Folgendes umfasst:
ein Gleitglied (330), das an beiden Enden einer Leitspindel (291, 292) und einer Führungsstange (281, 282) angeschlossen ist;
einen Gleitweg (340), wobei das Gleitglied (330) dazu angeordnet ist, auf dem Gleitweg (340) geführt zu werden; und
einen dritten Motor (360) zum Ansteuern des Gleitglieds (330).

16. Verfahren nach Anspruch 15, worin das Gleitglied (330) eine Kugellaufbuchse ist und ein Gleitweg (340) ein Bolzen ist.

17. Verfahren nach einem der Ansprüche 10 bis 16, außerdem umfassend, dass ein Steuergerät zum Steuern des ersten Ansteuermittel (270, 291, 292, 281, 282, 301, 302) und des zweiten Ansteuermittel (330, 340, 360) verwendet wird, um die Abstände der Vielzahl von Laserköpfen (250) und einen Pfad der Vielzahl von Laserköpfen (250) anzupassen.

18. Verfahren nach einem der Ansprüche 10 bis 17, worin eine Wellenlänge des von der Laserbestrahlungsvorrichtung bestrahlten Lasers im Bereich von 800 Nanometern bis 1200 Nanometern liegt.

19. Verfahren nach Anspruch 10, worin das Ziel eine Vielzahl von Fritten (230) ist, wobei die Fritten (230) dazu angeordnet sind, eine organische Emissionsschicht eines organischen lichtemittierenden Displays von einer Außenluft zu isolieren, wobei das Verfahren außerdem umfasst:
Verwenden eines Laseroszillators (260) zum Oszillieren einer Vielzahl von Laserstrahlen (251), worin die Vielzahl von Laserköpfen (250) einen jeweiligen oszillierten Laserstrahl (251) empfängt, worin jeder Laserkopf (250) dazu angeordnet ist, eine der Vielzahl von Fritten (230) zu bestrahlen, die auf einem Foliensubstrat mit einem linearen Laserstrahl geformt sind; und Schneiden des Foliensubstrats, um eine Anzahl von einzelnen organischen lichtemittierenden Displayeinrichtungen zu formen.

## Revendications

1. Appareil de rayonnement de laser comprenant :
une pluralité de têtes laser (250), chacune pour irradier une cible (230) avec un faisceau laser (251) ;
un premier moyen d'entraînement (270, 291, 292, 281, 282, 301, 302) pour ajuster l'espacement relatif desdites têtes laser (250), et pour déplacer lesdites têtes laser (250) dans une première direction ; et
un deuxième moyen d'entraînement (330, 340, 360) pour déplacer lesdites têtes laser (250) dans une deuxième direction différente de la première direction ;
et **caractérisé en ce que** le premier moyen d'entraînement (270, 291, 292, 281, 282, 301, 302) comprend :
un élément de support (270) comprenant une pluralité d'unités ayant une forme en X, qui sont liées pour relier lesdites têtes laser (250) les unes aux autres ;
une première vis-mère (291) formée pour passer à travers un premier groupe de ladite pluralité de têtes laser (250) ;
une première barre de guidage (281, 282) disposée pour passer à travers ladite pluralité de têtes laser (250) et agencée pour être parallèle à ladite première vis-mère (291) ;
un premier moteur (301) pour faire tourner ladite première vis-mère (291) ;
une deuxième vis-mère (292) disposée pour passer à travers un deuxième groupe de ladite pluralité de têtes laser (250), dans lequel la deuxième vis-mère (292) est agencée pour être coaxiale avec ladite première vis-mère (291) ;
une deuxième barre de guidage (282) formée pour passer à travers ladite pluralité de têtes laser (250) et agencée pour être parallèle à ladite deuxième vis-mère (292) ; et
un deuxième moteur (302) pour faire tourner ladite deuxième vis-mère (292).

2. Appareil de rayonnement de laser selon la revendication 1, dans lequel les première et deuxième directions sont à 90° l'une par rapport à l'autre.

3. Appareil de rayonnement de laser selon la revendication 1 ou 2, dans lequel chaque unité de l'élément de support (270) a la même taille.

4. Appareil de rayonnement de laser selon l'une quelconque des revendications précédentes, comprenant en outre un élément de liaison (320) pour relier ladite première vis-mère (291) et ladite deuxième vis-mère (292) l'une à l'autre, tout en empêchant que la rotation de l'une des vis-mères n'affecte l'autre des vis-mères.

5. Appareil de rayonnement de laser selon l'une quelconque des revendications 1 à 4, dans lequel ledit deuxième moyen d'entraînement (330, 340, 360) comprend :
un élément coulissant (330) relié à la fois aux extrémités de l'une des vis-mères (291, 292) et d'une barre de guidage (281, 282) ;
un trajet de coulissement (340), ledit élément coulissant (330) étant agencé de manière à être guidé sur ledit trajet de coulissement (340) ; et
un troisième moteur (360) pour entraîner ledit élément coulissant (330).

6. Appareil de rayonnement de laser selon la revendication 5, dans lequel ledit élément coulissant (330) est une douille à bille, et un trajet de coulissement est un arbre.

7. Appareil de rayonnement de laser selon l'une quelconque des revendications 1 à 6, comprenant en outre un contrôleur pour commander ledit premier moyen d'entraînement (270, 291, 292, 281, 282, 301, 302) et ledit deuxième moyen d'entraînement (330, 340, 360) de manière à ajuster l'espacement de la pluralité de têtes laser (250) et un trajet de ladite pluralité de têtes laser (250).

8. Appareil de rayonnement de laser selon l'une quelconque des revendications précédentes, dans lequel une longueur d'onde du laser rayonné par l'appareil de rayonnement de laser est dans la plage de 800 nanomètres à 1200 nanomètres.

9. Appareil de rayonnement de laser selon l'une quelconque des revendications précédentes, dans lequel l'appareil comprend en outre :
un oscillateur de laser (260) pour faire osciller une pluralité de faisceaux laser (251) ;
dans lequel chacune de la pluralité de têtes laser (250) comprend un système optique pour convertir un faisceau laser (251) oscillant en un faisceau linéaire ;
dans lequel chacune de la pluralité de têtes laser (250) irradie une cible (230) avec un dit faisceau linéaire.

10. Procédé d'irradiation d'une cible comprenant;
l'utilisation d'une pluralité de têtes laser (250), chacune pour irradier une cible (230) avec un faisceau laser (251) ;
l'utilisation d'un premier moyen d'entraînement (270, 291, 292, 281, 282, 301, 302) pour ajuster l'espacement relatif de ladite pluralité de têtes laser (250), et pour déplacer ladite pluralité de têtes laser (250) dans une première direction ; et
l'utilisation d'un deuxième moyen d'entraînement (330, 340, 360) pour déplacer ladite pluralité de têtes laser (250) dans une deuxième direction différente de la première direction ;
dans lequel le premier moyen d'entraînement (270, 291, 292, 281, 282, 301, 302) comprend :
un élément de support (270) comprenant une pluralité d'unités ayant une forme en X, qui sont liées pour relier ladite pluralité de têtes laser (250) les unes aux autres ;
une première vis-mère (291) formée pour passer à travers un premier groupe de ladite pluralité de têtes laser (250) ;
une première barre de guidage (281, 282) disposée pour passer à travers ladite pluralité de têtes laser (250) et agencée pour être parallèle à ladite première vis-mère (291) ;
un premier moteur (301) pour faire tourner ladite première vis-mère (291) ;
une deuxième vis-mère (292) disposée pour passer à travers un deuxième groupe de ladite pluralité de têtes laser (250), dans lequel la deuxième vis-mère (292) est agencée pour être coaxiale avec ladite première vis-mère (291) ;
une deuxième barre de guidage (282) formée pour passer à travers ladite pluralité de têtes laser (250) et agencée pour être parallèle à ladite deuxième vis-mère (292) ; et
une deuxième moteur (302) pour faire tourner ladite deuxième vis-mère (292).

11. Procédé selon la revendication 10, dans lequel la cible (230) consiste en une pluralité de frittes (230), lesdites frittes (230) étant agencées pour isoler une couche d'émission organique d'un afficheur à émission de lumière organique de l'air extérieur, le procédé comprenant en outre :
l'utilisation du premier moyen d'entraînement (270, 291, 292, 281, 282, 301, 302) pour déplacer ladite pluralité de têtes laser (250) le long d'une ligne formée par les frittes (230).

12. Procédé selon la revendication 11, dans lequel la fritte (230) a une forme rectangulaire, la première direction est une direction transversale de la fritte (230), et la deuxième direction est une direction longitudinale de la fritte (230).

13. Procédé selon l'une quelconque des revendications 10 à 12, dans lequel chaque unité dudit élément de support (270) a la même taille.

14. Procédé selon l'une quelconque des revendications 10 à 13, comprenant en outre l'utilisation d'un élément de liaison (320) pour relier ladite première vis-mère (291) et ladite deuxième vis-mère (292) l'une à l'autre, tout en empêchant que la rotation de l'une des vis-mères n'affecte l'autre des vis-mères.

15. Procédé selon l'une quelconque des revendications 10 à 14, dans lequel ledit deuxième moyen d'entraînement (330, 340, 360) comprend :
un élément coulissant (330) relié à la fois aux extrémités d'une vis-mère (291, 292) et d'une barre de guidage (281, 282) ;
un trajet de coulissement (340), ledit élément coulissant (330) étant guidé sur ledit trajet de coulissement (340) ; et
un troisième moteur (360) pour entraîner ledit élément coulissant (330).

16. Procédé selon la revendication 15, dans lequel ledit élément coulissant (330) est une douille à bille, et un trajet de coulissement (340) est un arbre.

17. Procédé selon l'une quelconque des revendications 10 à 16, comprenant en outre l'utilisation d'un contrôleur pour commander ledit premier moyen d'entraînement (270, 291, 292, 281, 282, 301, 302) et ledit deuxième moyen d'entraînement (330, 340, 360) de manière à ajuster l'espacement de la pluralité de têtes laser (250) et un trajet de ladite pluralité de têtes laser (250).

18. Procédé selon l'une quelconque des revendications 10 à 17, dans lequel une longueur d'onde du laser rayonné par l'appareil de rayonnement de laser est dans la plage de 800 nanomètres à 1200 nanomètres,

19. Procédé selon la revendication 10, dans lequel la cible consiste en une pluralité de frittes (230), lesdites frittes (230) étant agencées pour isoler une couche d'émission organique d'un afficheur à émission de lumière organique de l'air extérieur, le procédé comprenant en outre :
l'utilisation d'un oscillateur de laser (260) pour faire osciller la pluralité de faisceaux laser (251), dans lequel la pluralité de têtes laser (250) reçoivent un faisceau laser (251) oscillant respectif, dans lequel chaque tête laser (250) est agencée pour irradier l'une de la pluralité de frittes (230) fermées sur un substrat en feuille avec un faisceau laser linéaire ; et la découpe du substrat en feuille de manière à former un certain nombre de dispositifs d'affichage à émission de lumière organiques individuels.
